# FASCICULE DE BREVET EUROPEEN

(11) **EP 1 377 773 B1**
(45) Date de publication et mention de la délivrance du brevet: **08.09.2004**
(21) Numéro de dépôt: 02732796.4
(22) Date de dépôt: 10.04.2002
(51) Int. Cl.: F16L 27/06, F16L 27/107, F01N 7/18

(54) **JOINT ARTICULE DESTINE A RELIER ENTRE ELLES DEUX CONDUITES DE FLUIDE**
GELENKIGE VERBINDUNG FÜR DAS ANSCHLIESSEN ZWEIER FLUIDLEITUNGSROHRE
ARTICULATED JOINT FOR INTERCONNECTING TWO PIPES FOR LIQUID

(30) Priorité: 10.04.2001 FR 0104878
(43) Date de publication de la demande: 07.01.2004
(73) Titulaire: ACC- La Jonchere, 92000 Nanterre (FR)
(72) Inventeur: LAUBIE, Jean-Yves, F-92200 Neuilly-sur-Seine (FR)
(74) Mandataire: Colas, Jean-Pierre
(86) Numéro de dépôt international: PCT/FR2002/001251
(87) Numéro de publication internationale: WO 2002/084164

(56) Documents cités:
- EP-A- 0 453 691
- EP-A- 1 055 807
- US-A- 5 967 565

## Description

La présente invention est relative à un joint articulé destiné, notamment, à relier entre elles deux conduites d'écoulement de fluide liquide ou gazeux.

De tels joints sont utilisés dans certains domaines tels que l'aéronautique ou l'automobile lorsqu'il est nécessaire, au montage ou en service, de permettre un débattement angulaire entre deux conduites.

On connaît du document US-A-5 967 565 un joint articulé permettant d'assurer une telle liaison, comprenant:
- un embout femelle présentant une extrémité sensiblement sphérique,
- un embout mâle reçu dans l'embout femelle et présentant un épaulement au voisinage de son extrémité,
- une bague intérieure enfilée sur ledit embout mâle, dont la face extérieure est sensiblement sphérique,
- un organe élastique de poussée interposé entre ledit embout femelle et ledit embout mâle pour solliciter ledit épaulement en appui contre ladite bague intérieure de manière que la face extérieure de ladite bague intérieure se trouve en contact glissant contre la face intérieure de l'extrémité sensiblement sphérique dudit embout femelle, et
- une bague extérieure enfilée sur l'extrémité sensiblement sphérique dudit embout femelle, dont la face intérieure est sensiblement sphérique, et des moyens solidaires dudit embout mâle pour maintenir ladite bague extérieure dans une position où sa face intérieure se trouve en contact glissant contre la face extérieure de l'extrémité sensiblement sphérique dudit embout femelle.

Dans ce joint articulé de la technique antérieure, les bagues intérieure et extérieure remplissent notamment une fonction d'amortissement des vibrations transmises de l'embout femelle à l'embout mâle (et inversement), et sont formées à cet effet dans un matériau élastique.

Ce joint articulé possédant deux degrés de liberté ne peut fonctionner correctement que si l'épaulement de l'embout mâle, la bague intérieure, l'extrémité sensiblement sphérique de l'embout femelle, la bague extérieure et les moyens de maintien solidaires de l'embout mâle sont en contact positif, c'est-à-dire sans jeu.

Or, dans ce joint articulé de la technique antérieure, des efforts tendant à déplacer axialement ou radialement les embouts femelle et mâle l'un par rapport à l'autre sont susceptibles de rompre ce contact positif, ce qui peut conduire à une dégradation de la précision du mouvement de rotation de l'embout femelle par rapport à l'embout mâle, à l'apparition de vibrations et de chocs lors du fonctionnement, voire à un défaut d'étanchéité du joint articulé.

La présente invention a pour but de remédier à ces inconvénients.

On atteint ce but de l'invention avec un joint articulé destiné, notamment, à relier entre elles deux conduites d'écoulement de fluide liquide ou gazeux, comprenant:
- un embout femelle présentant une extrémité sensiblement sphérique,
- un embout mâle reçu dans l'embout femelle et présentant un épaulement au voisinage de son extrémité,
- une bague intérieure enfilée sur ledit embout mâle, dont la face extérieure est sensiblement sphérique, et
- un organe élastique de poussée interposé entre ledit embout femelle et ledit embout mâle pour solliciter ledit épaulement en appui contre ladite bague intérieure de manière que la face extérieure de ladite bague intérieure se trouve en contact glissant contre la face intérieure de l'extrémité sensiblement sphérique dudit embout femelle, et
- une bague extérieure enfilée sur l'extrémité sensiblement sphérique dudit embout femelle, dont la face intérieure est sensiblement sphérique, et des moyens solidaires dudit embout mâle pour maintenir ladite bague extérieure dans une position où sa face intérieure se trouve en contact glissant contre la face extérieure de l'extrémité sensiblement sphérique dudit embout femelle,
caractérisé en ce que lesdites bagues intérieure et extérieure sont formées dans un matériau rigide.

Grâce à leur rigidité, les bagues intérieure et extérieure ne peuvent pas être comprimées, et on s'assure ainsi que des efforts tendant à déplacer axialement ou radialement les embouts femelle et mâle l'un par rapport à l'autre ne viendront pas rompre le contact positif susmentionné. On peut de la sorte s'affranchir des inconvénients susmentionnés.

Suivant d'autres modes de réalisation du joint articulé selon l'invention :
- lesdits moyens de maintien comprennent une pièce annulaire dont une première extrémité est fixée sur ledit embout mâle et dont une deuxième extrémité définit un épaulement maintenant ladite bague extérieure dans ladite position,
- ladite pièce annulaire comporte une partie intermédiaire sensiblement sphérique complémentaire de l'extrémité sensiblement sphérique dudit embout femelle,
- ledit organe élastique est librement en appui à l'une au moins de ses extrémités contre l'un desdits embouts, sans être fixé audit embout, de manière à autoriser une rotation axiale dudit embout par rapport audit organe élastique et à l'autre embout,
- ledit organe élastique est choisi dans le groupe comprenant un soufflet élastique, un ressort hélicoïdal, et une rondelle élastique,
- au moins l'une desdites bagues intérieure et extérieure est formée au moins en partie en métal recouvert d'un dépôt d'un matériau glissant choisi dans le groupe comprenant le PTFE, du graphite et une céramique,
- au moins l'une desdites bagues intérieure et extérieure comprend une partie coopérant avec l'un desdits épaulements formée dans un matériau choisi dans le groupe comprenant un métal, du graphite et une céramique, et une partie coopérant avec l'extrémité sensiblement sphérique dudit embout femelle, formée dans un matériau glissant tel que le PTFE,
- au moins l'une desdites bagues intérieure et extérieure est formée intégralement dans un matériau choisi dans le groupe comprenant le métal, le PTFE, le graphite et une céramique,
- l'un au moins desdits embouts femelle et mâle comprend un guide destiné à favoriser l'écoulement dudit fluide.

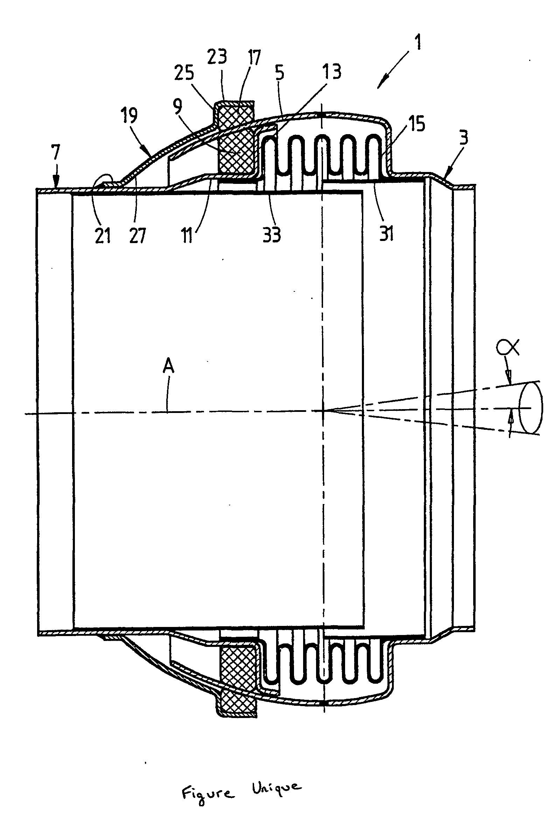

D'autres avantages de la présente invention apparaîtront à la lecture de la description qui va suivre et à l'examen du dessin annexé, dans lequel l'unique figure représente une vue en coupe axiale du joint articulé selon l'invention.

Toutes les pièces qui vont être décrites dans ce qui suit sont à symétrie de révolution autour de l'axe A du joint (voir figure).

Le joint articulé 1 selon l'invention comprend un embout femelle 3 présentant une extrémité sensiblement sphérique 5.

L'embout femelle 3 reçoit un embout mâle 7 sur lequel est enfilé une bague intérieure 9 dont la face extérieure, c'est-à-dire la face en appui contre l'extrémité sensiblement sphérique 5, est elle-même sphérique.

Le diamètre de la face extérieure de la bague intérieure 9 correspond sensiblement au diamètre de l'extrémité sensiblement sphérique 5.

L'extrémité 11 de l'embout mâle 7 comprend un épaulement 13 en forme de collerette formant butée pour la bague intérieure 9.

La bague intérieure 9 est de préférence montée libre sur l'embout mâle 7, c'est-à-dire avec un léger jeu radial.

Un organe élastique 15 est interposé entre l'embout femelle 3 et la collerette 13.

Cet organe élastique peut être par exemple un soufflet élastique en métal comme cela est représenté sur la figure, ou bien un ressort hélicoïdal, ou bien encore une rondelle élastique (non représentés).

De préférence, comme cela est représenté, toute la partie de l'embout femelle 3 qui recouvre l'organe élastique 15 est sensiblement sphérique.

Le joint articulé 1 comprend également une bague extérieure 17 enfilée sur l'extrémité sensiblement sphérique 5 de l'embout femelle 3, dont la face intérieure, c'est-à-dire la face en contact avec l'extrémité 5, est elle-même sensiblement sphérique.

Le joint articulé 1 comprend en outre des moyens pour maintenir la bague extérieure 17 dans une position où sa face intérieure se trouve en contact glissant contre la face extérieure de l'extrémité sensiblement sphérique 5.

Ces moyens peuvent comprendre, comme cela est représenté sur la figure, une pièce annulaire 19 dont une première extrémité 21 est fixée, par exemple par soudage, sur l'embout mâle 7, et dont l'autre extrémité 23 définit un épaulement 25 recevant la bague extérieure 17 de manière à la maintenir en contact glissant contre la face extérieure de l'extrémité sensiblement sphérique 5.

Entre ses extrémités 21 et 23, la pièce annulaire 19 comporte une partie intermédiaire 27 sensiblement sphérique, complémentaire de l'extrémité sensiblement sphérique 5 de l'embout femelle 3.

Les bagues intérieure 9 et extérieure 17 sont formées dans un matériau rigide.

Selon une première variante possible, la bague intérieure 9 et/ou la bague extérieure 17 peut être formée au moins en partie en métal recouvert d'un matériau glissant choisi dans le groupe comprenant le PTFE (polytétrafluroéthylène), du graphite et une céramique.

Selon une deuxième variante possible, la bague intérieure 9 et/ou la bague extérieure 17 peut comprendre une partie coopérant avec l'épaulement 13 (resp. avec l'épaulement 25) formée dans un matériau choisi dans le groupe comprenant du métal, du graphite et une céramique, et une partie coopérant avec l'extrémité sensiblement sphérique 5 de l'embout femelle 3, formée dans un matériau glissant tel que le PTFE.

Selon une troisième variante possible, la bague intérieure 9 et/ou la bague extérieure 17 peut être formée intégralement dans un matériau choisi dans le groupe comprenant le métal, le PTFE, le graphite et une céramique.

De manière optionnelle, l'un au moins des embouts femelle 3 et mâle 7 peut comprendre un guide sensiblement cylindrique 31 (resp. 33) fixé coaxialement à l'intérieur de cet embout.

Les embouts femelle 3 et mâle 7, la pièce annulaire 19 ainsi que les guides 31, 33 peuvent être fabriqués dans un alliage métallique.

L'extrémité sensiblement sphérique 5 de l'embout femelle 3 peut être rapportée sur le reste de cet embout par soudage.

Les avantages du joint articulé selon l'invention résultent directement de la description qui précède.

De par sa géométrie et de par le fait que les bagues intérieure 9 et extérieure 17 peuvent glisser par rapport à l'extrémité sensiblement sphérique 5 de l'embout femelle 3, le joint articulé 1 permet un certain débattement angulaire α de l'embout femelle 3 par rapport à l'embout mâle 7.

L'organe élastique 15 interposé entre l'embout femelle 3 et la collerette 13 permet d'une part de solliciter cette collerette en appui contre la bague intérieure 9, et d'autre part de solliciter la face extérieure de cette bague intérieure en appui glissant contre la face intérieure de l'extrémité sensiblement sphérique 5 de l'embout femelle 3.

On obtient de la sorte une bonne étanchéité vis-à-vis du fluide qui est susceptible de circuler à l'intérieur du joint articulé.

De par le fait qu'elles sont rigides, les bagues intérieure 9 et extérieure 17 permettent d'éviter que des efforts tendant à déplacer axialement ou radialement les embouts femelle 3 et mâle 7 l'un par rapport à l'autre ne viennent rompre le contact positif établi entre l'épaulement 13 de l'embout mâle 3, la bague intérieure 9, l'extrémité sensiblement sphérique 5 de l'embout femelle 3, la bague extérieure 17 et la pièce annulaire 19.

On peut de la sorte s'affranchir de tout risque de dégradation de la précision du mouvement de rotation de l'embout mâle par rapport à l'embout femelle, d'apparition de vibrations et de chocs lors du fonctionnement, voire de défaut d'étanchéité du joint articulé.

On notera par ailleurs que l'organe élastique 15 permet de rappeler élastiquement les embouts femelle 3 et mâle 7 dans l'alignement l'un de l'autre, du fait que cet organe élastique prend appui contre ces deux embouts.

Lorsque cet organe élastique 15 est librement en appui à l'une au moins de ses extrémités contre l'un des embouts femelle 3 ou mâle 7, sans y être fixé, on autorise une rotation axiale de cet embout par rapport à cet organe élastique et à l'autre embout. On obtient de la sorte un joint articulé à trois degrés de liberté.

L'utilisation de guides 31, 33 dans le joint selon l'invention permet d'améliorer l'écoulement du fluide dans ce joint.

Par ailleurs, l'utilisation d'un matériau glissant tel que le PTFE, le graphite ou une céramique pour former au moins une partie des bagues intérieure 9 et extérieure 17 permet d'éviter le grippage du joint selon l'invention.

On notera également que le fait de prévoir que toute la partie de l'embout femelle 3 qui recouvre l'organe élastique 15 est sensiblement sphérique permet d'obtenir un débattement angulaire plus important des deux embouts l'un par rapport à l'autre.

## Revendications

1. Joint articulé (1) destiné, notamment, à relier entre elles deux conduites d'écoulement de fluide liquide ou gazeux, comprenant:
- un embout femelle (3) présentant une extrémité sensiblement sphérique (5),
- un embout mâle (7) reçu dans l'embout femelle (3) et présentant un épaulement (13) au voisinage de son extrémité,
- une bague intérieure (9) enfilée sur ledit embout mâle (7), dont la face extérieure est sensiblement sphérique, et
- un organe élastique de poussée (15) interposé entre ledit embout femelle (3) et ledit embout mâle (7) pour solliciter ledit épaulement (13) en appui contre ladite bague intérieure (9) de manière que la face extérieure de ladite bague intérieure (9) se trouve en contact glissant contre la face intérieure de l'extrémité sensiblement sphérique (5) dudit embout femelle (3), et
- une bague extérieure (17) enfilée sur l'extrémité sensiblement sphérique (5) dudit embout femelle (3), dont la face intérieure est sensiblement sphérique, et des moyens (19) solidaires dudit embout mâle (7) pour maintenir ladite bague extérieure (17) dans une position où sa face intérieure se trouve en contact glissant contre la face extérieure de l'extrémité sensiblement sphérique (5) dudit embout femelle (3),
**caractérisé en ce que** lesdites bagues intérieure (9) et extérieure (17) sont formées dans un matériau rigide.

2. Joint articulé (1) selon la revendication 1, **caractérisé en ce que** lesdits moyens de maintien comprennent une pièce annulaire (19) dont une première extrémité (21) est fixée sur ledit embout mâle (7) et dont une deuxième extrémité (23) définit un épaulement (25) maintenant ladite bague extérieure (17) dans ladite position.

3. Joint articulé (1) selon la revendication 2, **caractérisé en ce que** ladite pièce annulaire (19) comporte une partie intermédiaire sensiblement sphérique (27) complémentaire de l'extrémité sensiblement sphérique (5) dudit embout femelle (3).

4. Joint articulé (1) selon l'une quelconque des revendications précédentes, **caractérisé en ce que** ledit organe élastique (15) est librement en appui à l'une au moins de ses extrémités contre l'un desdits embouts (3, 7), sans être fixé audit embout, de manière à autoriser une rotation axiale dudit embout par rapport audit organe élastique et à l'autre embout.

5. Joint articulé (1) selon l'une quelconque des revendications précédentes, **caractérisé en ce que** ledit organe élastique (15) est choisi dans le groupe comprenant un soufflet élastique, un ressort hélicoïdal, et une rondelle élastique.

6. Joint articulé (1) selon l'une quelconque des revendications précédentes, **caractérisé en ce qu'**au moins l'une desdites bagues intérieure (9) et extérieure (17) est formée au moins en partie en métal recouvert d'un dépôt d'un matériau glissant choisi dans le groupe comprenant le PTFE, du graphite et une céramique.

7. Joint articulé (1) selon l'une quelconque des revendications précédentes, **caractérisé en ce qu'**au moins l'une desdites bagues intérieure (9) et extérieure (17) comprend une partie coopérant avec l'un desdits épaulements (13, 25) formée dans un matériau choisi dans le groupe comprenant un métal, du graphite et une céramique, et une partie coopérant avec l'extrémité sensiblement sphérique (5) dudit embout femelle, formée dans un matériau glissant tel que le PTFE.

8. Joint articulé (1) selon l'une quelconque des revendications précédentes, **caractérisé en ce qu'**au moins l'une desdites bagues intérieure (9) et extérieure (17) est formée intégralement dans un matériau choisi dans le groupe comprenant le métal, le PTFE, le graphite et une céramique.

9. Joint articulé (1) selon l'une quelconque des revendications précédentes, **caractérisé en ce que** l'un au moins desdits embouts femelle (3) et mâle (7) comprend un guide (31, 33) destiné à favoriser l'écoulement dudit fluide.

## Patentansprüche

1. Gelenkverbindung (1), die insbesondere dazu vorgesehen ist, zwei Rohrleitungen für flüssige oder gasförmige Medien miteinander zu verbinden, umfassend:
- eine Rohrmuffe (3), die ein im Wesentlichen kugelförmiges Ende (5) aufweist,
- ein Rohrelement (7), das in der Rohrmuffe (3) aufgenommen wird und in Nähe seines Endes ein Schulterstück (13) aufweist,
- einen inneren Ring (9), der auf das Rohrelement (7) gestülpt ist, dessen Außenfläche im Wesentlichen kugelförmig ist und
- ein elastisches Halterungselement (15), das zwischen die Rohrmuffe (3) und das Rohrelement (7) eingefügt ist, um das Schulterstück (13) als Unterstützung gegen den inneren Ring (9) so zu beanspruchen, dass sich die Außenfläche des inneren Rings (9) in Gleitkontakt zu der Innenfläche des im Wesentlichen kugelförmigen Endes (5) der Rohrmuffe (3) befindet und
- einen äußeren Ring (17), der auf das im Wesentlichen kugelförmige Ende (5) der Rohrmuffe (3) gestülpt ist, dessen Innenfläche im Wesentlichen kugelförmig ist sowie Rückhaltemittel (19) des Rohrelements (7), um den äußeren Ring (17) in einer Position zu halten, in der sich seine Innenfläche in Gleitkontakt zu der Außenfläche des im Wesentlichen kugelförmigen Endes (5) der Rohrmuffe (3) befindet,
**dadurch gekennzeichnet, dass** der innere (9) und äußere Ring (17) aus einem starren Material gebildet sind.

2. Gelenkige Verbindung (1) nach Anspruch 1, **dadurch gekennzeichnet, dass** die Haltemittel ein Ringstück (19) umfassen, dessen eines Ende (21) an dem Rohrelement (7) befestigt ist und ein zweites Ende (23) ein Schulterstück (25) beschreibt, das den äußeren Ring (17) in Position hält.

3. Gelenkige Verbindung (1) nach Anspruch 2, **dadurch gekennzeichnet, dass** das Ringstück (19) ein im Wesentlichen kugelförmiges Zwischenteil (27) enthält, welches das im Wesentlichen kugelförmige Ende (5) der Rohrmuffe (3) ergänzt.

4. Gelenkige Verbindung (1) nach einem der vorherigen Ansprüche, **dadurch gekennzeichnet, dass** das elastische Element (15) derart mit wenigstens einem seiner Enden frei gegen eines der Verbindungselemente (3, 7) gestützt ist, ohne daran befestigt zu sein, dass eine axiale Rotation dieses Verbindungselements gegenüber dem elastischen Element und dem anderen Verbindungselement erlaubt wird.

5. Gelenkige Verbindung (1) nach einem der vorherigen Ansprüche, **dadurch gekennzeichnet, dass** das elastische Element (15) ausgewählt ist aus der Gruppe, die einen elastischen Balg, eine Schraubenfeder und eine Federscheibe umfasst.

6. Gelenkige Verbindung (1) nach einem der vorherigen Ansprüche, **dadurch gekennzeichnet, dass** wenigstens einer der inneren (9) und äußeren (17) Ringe wenigstens teilweise aus einem Metall gebildet ist, das mit einer Auflage eines gleitenden Materials beschichtet ist, welches ausgewählt ist aus der Gruppe, die PTFE, Graphit und ein keramisches Material umfasst.

7. Gelenkige Verbindung (1) nach einem der vorherigen Ansprüche, **dadurch gekennzeichnet, dass** wenigstens einer der inneren (9) und äußeren (17) Ringe einen Anteil umfasst, der mit einem der Schulterstücke (13, 25) zusammenwirkt, welcher aus einem Material ausgewählt aus der Gruppe, die ein Metall, Graphit und ein keramisches Material umfasst, gebildet ist sowie einen Anteil, der mit dem im Wesentlichen kugelförmigen Ende (5) der Rohrmuffe zusammenwirkt, welcher aus einem gleitfähigen Material wie etwa PTFE gebildet ist.

8. Gelenkige Verbindung (1) nach einem der vorherigen Ansprüche, **dadurch gekennzeichnet, dass** wenigstens einer der inneren (9) und äußeren (17) Ringe vollständig aus einem Material gebildet ist, welches ausgewählt ist aus der Gruppe, die Metall, PTFE, Graphit und ein keramisches Material umfasst.

9. Gelenkige Verbindung (1) nach einem der vorherigen Ansprüche, **dadurch gekennzeichnet, dass** wenigstens eines der Verbindungselemente Rohrmuffe (3) und Rohrelement (7) eine Führungsschiene (31, 33) umfasst, die dazu vorgesehen ist, den Durchfluss des Mediums zu begünstigen.

## Claims

1. An articulated joint (1) designed in particular to interconnect two liquid or gas fluid flow pipes, comprising:
- a female sleeve (3) having a substantially spherical end (5),
- a male muff joint (7) received in the female sleeve (3) and having a shoulder (13) in the vicinity of its end,
- an inner ring (9) threaded over said male muff joint (7), the exterior face of which is substantially spherical, and
- an elastic thrust member (15) disposed between said female sleeve (3) and said male muff joint (7) to press said shoulder (13) against said inner ring (9) so that the exterior face of said inner ring (9) is in sliding contact with the interior face of the substantially spherical end (5) of said female sleeve (3), and
- an outer ring (17) threaded over the substantially spherical end (5) of said female sleeve (3), the interior face of which is substantially spherical, and means (19) fastened to said male muff joint (7) to maintain said outer ring (17) in a position in which its interior face is in sliding contact with the exterior face of the substantially spherical end (5) of said female sleeve (3),
**characterized in that** said inner ring (9) and said outer ring (17) are made from a rigid material.

2. An articulated joint (1) according to claim 1, **characterized in that** said retaining means comprise an annular part (19) having a first end (21) fixed to said male muff joint (7) and a second end (23) defining a shoulder (25) for retaining said outer ring (17) in said position.

3. An articulated joint (1) according to claim 2, **characterized in that** said annular part (19) includes a substantially spherical intermediate portion (27) complementary to the substantially spherical end (5) of said female sleeve (3).

4. An articulated joint (1) according to any one of the preceding claims, **characterized in that** said elastic member (15) bears freely at one end at least against said female sleeve (3) or said male muff joint (7), without being fixed thereto, to allow axial rotation of said female sleeve or said male muff joint relative to said male muff joint or said female sleeve, respectively, and said elastic member.

5. An articulated joint (1) according to any one of the preceding claims, **characterized in that** said elastic member (15) is chosen from the group comprising an elastic bellows, a coil spring, and an elastic washer.

6. An articulated joint (1) according to any one of the preceding claims, **characterized in that** said inner ring (9) and/or said outer ring (17) is made at least in part from metal covered with a deposit of a low-friction material chosen from the group comprising PTFE, graphite, and a ceramic.

7. An articulated joint (1) according to any one of the preceding claims, **characterized in that** said inner ring (9) and/or said outer ring (17) has a portion cooperating with one of said shoulders (13, 25), made from a material chosen from the group comprising metal, graphite, and a ceramic, and a portion cooperating with the substantially spherical end (5) of said female sleeve, made from a low-friction material such as PTFE.

8. An articulated joint (1) according to any one of the preceding claims, **characterized in that** said inner ring (9) and/or said outer ring (17) is made entirely from a material chosen from the group comprising metal, PTFE, graphite, and a ceramic.

9. An articulated joint (1) according to any one of the preceding claims, **characterized in that** said female sleeve (3) and/or said male muff joint (7) comprises a guide (31, 33) designed to encourage the flow of said fluid.
